# EUROPÄISCHE PATENTSCHRIFT

(11) **EP 2 834 530 B1**
(45) Veröffentlichungstag und Bekanntmachung des Hinweises auf die Patenterteilung: **02.11.2016**
(21) Anmeldenummer: 13712557.1
(22) Anmeldetag: 27.03.2013
(51) Int. Cl.: F16C 35/067, F16C 35/04

(54) **VORRICHTUNG FÜR DIE LAGERUNG EINES WÄLZLAGERS EINER ELEKTRISCHEN MASCHINE, ELEKTRISCHE MASCHINE**
DEVICE FOR SUPPORTING A ROLLING BEARING OF AN ELECTRICAL MACHINE AND ELECTRICAL MACHINE
DISPOSITIF DE POSITIONNEMENT D'UN PALIER À ROULEMENT D'UNE MACHINE ÉLECTRIQUE, MACHINE ÉLECTRIQUE

(30) Priorität: 05.04.2012 DE 102012205690
(43) Veröffentlichungstag der Anmeldung: 11.02.2015
(73) Patentinhaber: Robert Bosch GmbH, 70442 Stuttgart (DE)
(72) Erfinder: BAUER, Christian, 77886 Lauf (DE)
(86) Internationale Anmeldenummer: PCT/EP2013/056538
(87) Internationale Veröffentlichungsnummer: WO 2013/149910

(56) Entgegenhaltungen:
- US-A- 5 531 526
- US-A- 5 931 585
- US-A1- 2009 261 693

## Beschreibung

Die Erfindung betrifft eine Vorrichtung, insbesondere Deckel oder Lagerschild, für die Lagerung eines Wälzlagers einer elektrischen Maschine, mit einer Lageraufnahme, die zur radialen Lagerung eines Wälzlagers der elektrischen Maschine eine Mantelwand und zur axialen Lagerung des Wälzlagers zumindest einen ersten Axialanschlag aufweist.

Ferner betrifft die Erfindung eine elektrische Maschine, insbesondere für ein Kraftfahrzeug, mit einem Gehäuse, in welchem ein Rotor drehbar gelagert angeordnet sind, wobei zumindest eine Stirnseite des Gehäuses durch eine separate Vorrichtung, insbesondere Deckel oder Lageschild, verschließbar ist, und wobei eine den Rotor tragende Rotorwelle zumindest mittels eines Wälzlagers in der Vorrichtung gehalten ist, wobei die Vorrichtung eine das Wälzlager aufnehmende Lageraufnahme mit einer das Wälzlager radial lagernden Mantelwand und mit einem ersten Axialanschlag für das Wälzlager aufweist.

### Stand der Technik

Elektrische Maschinen weisen in der Regel einen drehbar gelagerten Rotor und gegebenenfalls einen feststehenden Stator auf. Der Rotor selbst umfasst dabei zumindest eine Rotorwelle, auf der üblicherweise ein Lamellenpacket mit Permanentmagneten befestigt ist. Die Lagerung der Rotorwelle wird aus Montagegründen oftmals derart gestaltet, dass die Rotorwelle sowohl in einem Gehäuse als auch in einem das Gehäuse verschließenden Deckel und/oder Lagerschild gelagert ist, wobei häufig zur reibarmen Lagerung Wälzlager verwendet werden, deren Innenring auf die Rotorwelle aufgepresst und deren Außenring in dem Gehäuse beziehungsweise in dem Deckel gehalten wird.

Vorteilhafterweise bildet dabei eine Lagerung ein Festlager und die andere Lagerung ein Loslager, um eine überbestimmte Lagerung der Rotorwelle zu vermeiden. Für den Fall, dass das Loslager dem Deckel zugeordnet ist und dabei nur der Außenring des Wälzlagers axial festzulegen ist, kann das Wälzlager in vielen Fällen nicht direkt in den Deckel integriert werden. Dies ist meist durch die Montagereihenfolge bedingt, bei welcher das Wälzlager in ein separates Bauteil vor-montiert werden muss, welches dann zusammen mit dem Wälzlager auf die Rotorwelle montiert wird. Erst danach kann der Deckel befestigt werden. Für den Fall, dass das Wälzlager bereits vorab auf der Rotorwelle montiert sein soll und zudem das Wälzlager axial fixiert werden muss, gestaltet sich die Montage eher schwierig, da der Innenring mittels des Presssitzes drehfest mit der Welle verbunden ist und der Außenring über eine Spielpassung gelagert werden soll.

Aus der Patentschrift US 5,531,526 A geht außerdem eine Vorrichtung zur Lagerung eines Wälzlagers hervor, die vorsieht, dass das Wälzlager axial durch eine Schraubenfeder gegen einen Axialanschlag gepresst wird. Zur leichteren Montage sind dabei Sicherungsmittel, die in der Art eines Bajonettverschlusses wirken, vorgesehen. Ferner ist aus der US-Offenlegungsschrift US 2009/0261693 A1 ein Lagerdeckel bekannt, der ein Wälzlager axial formschlüssig aufnimmt.

### Offenbarung der Erfindung

Die erfindungsgemäße Vorrichtung mit den Merkmalen des Anspruchs 1 hat den Vorteil, dass, auch wenn das Wälzlager bereits auf der Rotorwelle vormontiert ist, die Befestigung an dem Deckel beziehungsweise der Vorrichtung einfach und schnell von statten gehen kann. Hierzu ist erfindungsgemäß vorgesehen, dass die Mantelwand von mehreren sich axial erstreckenden biegsamen Rasthaken gebildet wird, die einendig mit dem ersten Axialanschlag verbunden sind und anderendig jeweils eine nach innen gerichtete Rastnase aufweisen, die einen zweiten Axialanschlag für das Wälzlager bildet. Es ist also vorgesehen, dass die Mantelwand nicht als - umfänglich gesehen - durchgehende Mantelwand ausgebildet ist, sondern zumindest teilweise von biegsamen Rasthaken gebildet wird, die sich axial - im Sinne des Wälzlagers - erstrecken. Da die Rasthaken einendig mit dem ersten Achsialanschlag verbunden sind liegen die anderen Enden der Rasthaken frei und können in soweit unter Verbiegen des jeweiligen Rasthakens verlagert werden. Insbesondere sind die Rasthaken derart ausgebildet, dass die die Rastnasen aufweisenden Enden radial nach außen verbiegbar sind, unter elastischer Verformung der Rasthaken. Wird die Vorrichtung nunmehr mit der Lageraufnahme auf das auf der Rotorwelle vormontierte Wälzlager aufgeschoben, so werden die die Rastnasen aufweisenden Enden der Rasthaken radial nach außen gedrängt und das Wälzlager kann in die Lageraufnahme eingeführt werden. Sobald das Wälzlager vollständig in der Lageraufnahme aufgenommen ist, die Rastnasen also über das Wälzlager hinweg geschoben wurden, drängen die Rasthaken aufgrund ihrer Elastizität die Rastnasen wieder radial nach innen in ihre Ausgangsposition, so dass die Rastnasen das Wälzlager hintergreifen und dadurch den zweiten Axialanschlag für das Wälzlager bilden. Zweckmäßigerweise ist der Axialabstand zwischen dem ersten Axialanschlag und dem zweiten Axialanschlag entsprechend der Längserstreckung des Wälzlagers derart gewählt, dass dieses vollständig zwischen den Axialanschlägen anordbar ist. Vorzugsweise ist der Abstand zwischen dem ersten und dem zweiten Axialabschlag derart gewählt, dass zwischen Wälzlager und den Axialanschlägen eine Spielpassung gebildet wird, um das Loslager zu bilden. Die erfindungsgemäße Vorrichtung bietet somit auf einfache Art und Weise eine schnelle Montage des Wälzlagers durch ein axiales Aufschieben der Vorrichtung mit der einendig radial aufspreitzbaren Lageraufnahme auf das Wälzlager.

Gemäß einer vorteilhaften Weiterbildung der Erfindung ist vorgesehen, dass die Rasthaken einstückig mit dem ersten Axialanschlag ausgebildet sind. Die Biegesteifigkeit der Rasthaken ergibt sich somit aus dem für den ersten Axialanschlag und die Rasthaken gewählten Material sowie aus der geometrischen Gestaltung der Rasthaken. Besonders bevorzugt sind die Rasthaken und der erste Axialanschlag einstückig mit dem Deckel oder dem Lagerschild ausgebildet, wodurch ein leicht zu handhabendes Bauteil geboten wird, das die Montagezeit verringert.

Gemäß einer bevorzugten Weiterbildung der Erfindung ist vorgesehen, dass die Mantelwand mehrere im Wesentlichen steif ausgebildete Mantelwandabschnitte aufweist, die sich insbesondere axial zwischen banachbarten Rasthaken erstrecken, einendig mit dem ersten Axialanschlag verbunden und anderendig rastnasenfrei ausgebildet sind. Die steifen Mantelwandabschnitte erhöhen die zur radialen Lagerung aufbringbare Kraft der Lageraufnahme, während die Rasthaken vor allem die axiale Lagerung des Wälzlagers in der Lageraufnahme gewährleisten. Insoweit erfolgt im Wesentlichen eine Trennung der Funktionen, so dass sowohl hohe radiale Kräfte mittels der steifen Mantelwandabschnitte auf die Lageraufnahme übertragen werden können und mittels der biegsamen Rasthaken eine axiale Sicherung des Wälzlagers gewährleistet ist.
Besonders bevorzugt weisen die Rastnasen auf der dem zweiten Axialanschlag gegenüber liegenden Seite jeweils eine Einführschräge auf. Beim Aufschieben der Vorrichtung, beziehungsweise der Lageraufnahme auf das Wälzlager sorgt die Einführschräge dafür, dass die freien Enden der Rasthaken automatisch nach außen gedrängt werden, was den Montagevorgang vereinfacht.

Vorzugsweise sind die Rasthaken aus Kunststoff gefertigt. Hierdurch lässt sich je nach Zusammensetzung des Kunststoffes auf einfache Art und Weise die Biegesteifigkeit der Rasthaken einstellen, und insbesondere lässt sich hier durch eine einstückige Ausbildung mit dem ersten Axialanschlag und dem Deckel oder Lagerschild einfach realisieren.

Gemäß einer alternativen Ausführungsform der Erfindung ist vorgesehen, dass die Rasthaken aus Blech gefertigt sind. Hierdurch lassen sich besonders hohe Kräfte auf die Lageraufnahme übertragen.

Erfindungsgemäß ist vorgesehen, dass der erste und/oder der zweite Axialanschlag stirnseitig wenigstens ein elastisch verformbares Vorspannelement aufweisen. Das Vorspannelement dient dazu, das in die Lageraufnahme aufgenommene Wälzlager axial vorzuspannen. Das elastisch verformbare Vorspannelement erlaubt eine Verlagerung des Wälzlagers in der Lageraufnahme, so dass hierdurch die Spielpassung des Wälzlagers in dem Deckel oder Lagerschild gewährleistet wird.

Besonders bevorzugt ist das Vorspannelement als axial vorstehende Pressrippe oder als Federring, insbesondere als Wellfeder ausgebildet. Die Pressrippe ist bevorzugt an dem ersten Axialanschlag ausgebildet und steht insoweit axial vor.

Zweckmäßigerweise ist die Pressrippe einstückig mit dem ersten Axialanschlag ausgebildet. Durch ihre elastische Verformbarkeit erlaubt es die Pressrippe, dass das Wälzlager vollständig in die Lageraufnahme eingeführt wird und anschließend gegen den zweiten Axialanschlag gedrängt wird. Die Pressrippe, beziehungsweise das verformbare Vorspannelement, wird bei der Montage zunächst derart weit verformt, dass die Rastnasen sich wieder radial in ihrer Ausgangsstellung nach Innen bewegen können, um das Wälzlager zu hintergreifen. Zweckmäßigerweise sind mehrere Pressrippen über den Umfang verteilt, insbesondere gleichmäßig über den Umfang verteilt an dem ersten Axialanschlag ausgebildet. Alternativ hierzu ist ein zusätzlicher Federring, beispielsweise als die bereits genannte Wellfeder ausgebildet, an dem ersten Axialanschlag angeordnet, der bei der Montage des Wälzlagers, wie die Pressrippe auch, elastisch verformt wird, so dass die Rastnasen in ihre radiale Ausgangstellung zurück gelangen.

Die erfindungsgemäße elektrische Maschine mit den Merkmalen des Anspruchs 9 hat den Vorteil, dass sie schnell und einfach montierbar ist, ohne dass hierfür die Herstellungskosten erhöht werden. Sie zeichnet sich dadurch aus, dass die Vorrichtung wie oben stehend beschrieben ausgebildet ist..

Im Folgenden soll die Erfindung anhand der Zeichnung näher erläutert werden. Dazu zeigen
- Figur 1: eine vereinfachte Darstellung einer elektrischen Maschine,
- Figur 2: eine Lageraufnahme der elektrischen Maschine in einer perspektivischen Darstellung,
- Figur 3: die Lageraufnahme in einer vereinfachten Längsschnittdarstellung,
- Figur 4: die Lageraufnahme in einer Draufsicht und
- Figuren 5A und: B einen Montagevorgang der elektrischen Maschine.

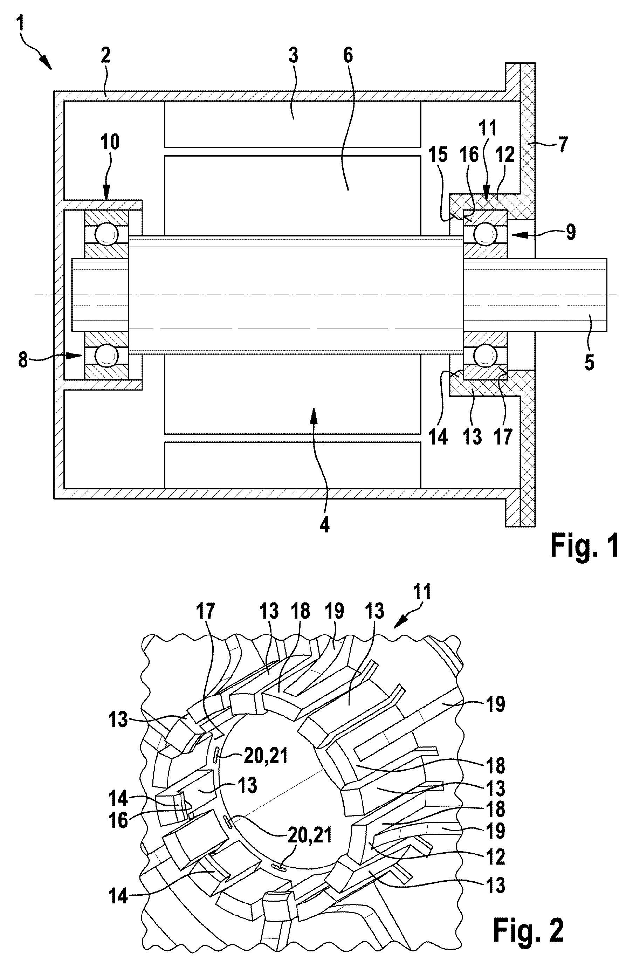

Figur 1 zeigt in einervereinfachten Darstellung eine elektrische Maschine 1, die ein Gehäuse 2 aufweist, in welchem ein Stator 3 ortsfest und ein Rotor 4 drehbar gelagert angeordnet sind. Der Stator 3 ist dazu mit der Gehäusewand des Gehäuses 2 verbunden, während der Rotor 4 von einer drehbaren im Gehäuse gelagerten Rotorwelle 5 gebildet wird, die ein Lamellenpacket 6 sowie nicht näher dargestellte Permanentmagnete trägt. Zur Aufnahme des Stators 3 und des Rotors 4 ist das Gehäuse 2 im Wesentlichen becherförmig ausgebildet und stirnseitig durch einen Deckel 7 verschlossen. Der Deckel 7 ist insoweit stirnseitig mit Bezug auf die Längsachse der Rotorwelle 5 an dem Gehäuse 2 angeordnet. Die Rotorwelle 5 wird mittels zweier Wälzlager 8 und 9 in dem Gehäuse reibarm gelagert. Das erste Lager 8 ist dabei direkt in einer Lageraufnahme 10 des Gehäuses 2 angeordnet. Das zweite Wälzlager 9 ist in einer Lageraufnahme 11 gehalten, die von dem Deckel 7 gebildet wird. Die Lageraufnahme 11 weist eine das Wälzlager 9 radial umgebende Mantelwand 12 auf, die das Wälzlager 9 im Wesentlichen spielfrei radial aufnimmt. Um das Wälzlager 9 axial in der Lageraufnahme 11 festzulegen, weist die Lageraufnahme 11 einen ersten Axialanschlag 17 auf, gegen welchen der Außenring des Wälzlagers 9 beim Einführen in die Lageraufnahme 11 gedrängt wird. Um das Wälzlager 9 auch in entgegengesetzter Richtung axial festzulegen, wird üblicherweise ein Sicherungsring oder dergleichen in der Lageraufnahme 11 vorgesehen, so dass das Wälzlager 9 zwischen dem Sicherungsring und dem ersten Axialanschlag 17 festliegt.

Figur 2 zeigt in einer Detailansicht die Lageraufnahme 11 des Deckels 7 in einer perspektivischen Darstellung. Die Mantelwand 12 ist dabei zum Teil von sich axial erstreckenden Rasthaken 13 gebildet, die einendig einstückig mit dem Deckel 7 ausgebildet sind und anderendig jeweils eine nach innen gerichtete Rastnase 14 aufweisen. Die Rastnasen 14 weisen dabei auf der dem Deckel 7 abgewandten Seite eine Einführschräge 15 auf, auf deren Funktion später näher eingegangen wird. Durch die biegsame Ausbildung lassen sich die Rasthaken 13 an ihren freien Enden radial nach außen verlagern, beziehungsweise biegen. Die dem Deckel 7 zugewandte Seite der Rastnasen 14 bildet dabei einen zweiten Axialanschlag 16 für das Wälzlager 9.

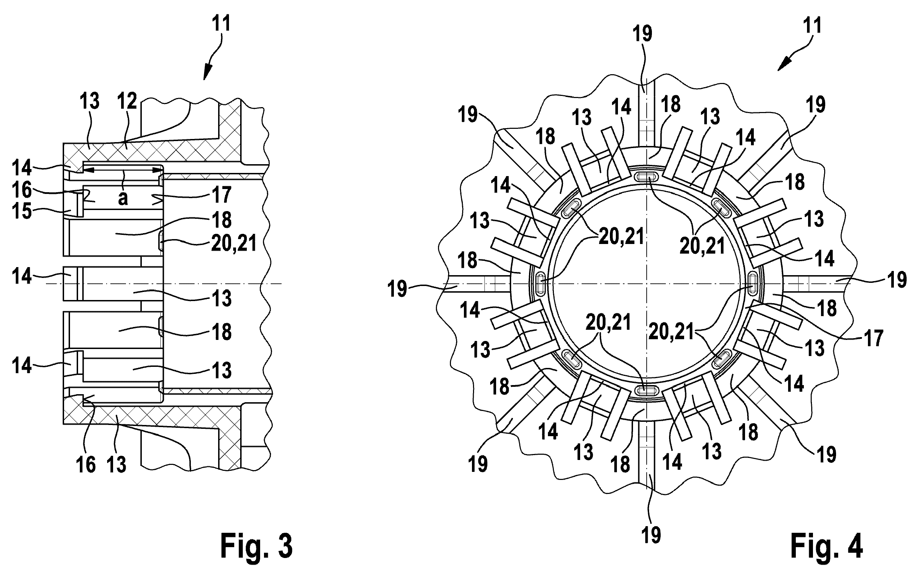

Figur 3 zeigt die Lageraufnahme 11 in einer vereinfachten Längsschnittdarstellung. Der Abstand a zwischen dem ersten Axialanschlag 17 und dem zweiten Axialanschlag 16 entspricht im Wesentlichen der Längserstreckung des Wälzlagers 9 zu dessen spielbehafteter Aufnahme.

Figur 4 zeigt die Lageraufnahme 11 in einer Draufsicht. Es ist zu erkennen, dass die Rasthaken 13 gleichmäßig verteilt über den Umfang der Lageraufnahme 11 zum Bilden der Mantelwand 12 angeordnet sind. Wobei die Rasthaken 13 in Umfangsrichtung gesehen beabstandet zueinander angeordnet sind. Zwischen jeweils zwei benachbarten Rasthaken 13 ist dabei ein steifer Mantelwandabschnitt 18 vorgesehen, der durch eine Verstärkungsrippe 19, wie auch aus Figur 2 ersichtlich, gegen ein Verbiegen radial nach außen gestützt ist. Die Innenseiten der Rasthaken 13 sowie der Mantelabschnitte 18 bilden miteinander eine Kreiszylinderförmige Aufnahme für das Wälzlager 9. Die Rastnasen 14 der Rasthaken 13 ragen radial nach innen über den Innendruchmesser der Mantelwand 12 hinaus.

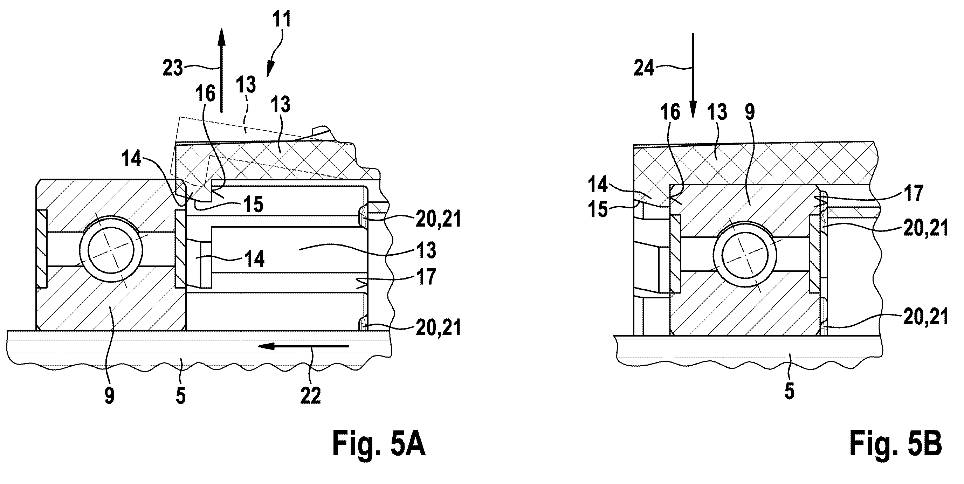

Wie aus Figuren 3 und 4 ebenfalls ersichtlich, weist der zweite Axialanschlag 17 zusätzlich mehrere auf einer Stirnseite angeordnete und gleichmäßig über den Umfang verteilte Pressrippen 20 auf, die elastisch verformbare Vorspannelemente 21 bilden. Im Folgenden soll die Funktionsweise der Vorrichtung anhand der Figuren 5A und 5B näher erläutert werden.

Figuren 5A und 5B zeigen schrittweise die Montage des Wälzlagers 9 in der Lageraufnahme 11. Wie aus Figur 5A ersichtlich wird der Deckel 7 mit der Lageraufnahme 11 auf das Wälzlager 9 axial aufgeschoben, wie durch einen Pfeil 22 angedeutet. Die Einführschrägen 15 der Rastnasen 14 sorgen dafür, dass bei dem Aufschieben auf das Wälzlager 9 die Rasthaken 13 an ihrem freien, die jeweilige Rastnase 14 aufweisenden Ende radial nach außen gedrängt werden, wie durch gestrichelte Linien und einen Pfeil 23 angedeutet. Der Deckel 7 wird so weit auf das Wälzlager 9 aufgeschoben, bis dieses gegen die Vorspannelemente 21 des ersten Axialanschlags 17 trifft. Der Deckel 7 wird weiter aufgeschoben, so dass die Vorspannelemente 21 elastisch verformt werden, bis die Rastnasen 14 über das Wälzlager 9 hinweg geschoben wurden und dahinter aufgrund der Elastizität der Rasthaken 13 wieder in ihre Ausgangslage radial nach innen verlagert werden, so dass sie das Wälzlager 9 hintergreifen, wie durch einen Pfeil 24 angedeutet. Anschließend kann die Aufschiebkraft verringert werden. Die Vorspannelemente 21 drängen nunmehr das Wälzlager 9 gegen den Axialanschlag 16, wodurch der Außenring des Wälzlagers 9 sicher in der Lageraufnahme 11 axial zwischen den Axialanschlägen 16 und 17 vorgespannt gehalten ist.

Die Rasthaken 13 dienen somit zur axialen Fixierung des Wälzlagers 9 in der Lageraufnahme 11. Durch die beschriebene Ausbildung der Lageraufnahme 11 lassen sich die Rasthaken auf einfache Art und Weise nach außen verlagern, wenn der Deckel auf das Wälzlager 9 mit der Lageraufnahme 11 aufgeschoben wird. Um im Betrieb auch hohe radiale Kräfte aufnehmen zu können, sind die zuvor beschriebenen steifen Mantelwandabschnitte 18 vorgesehen, die beim Einführen des Wälzlagers 9 in die Lageraufnahme 11 nicht radial nach außen gelenkt werden müssen, da sie nicht mit einer entsprechenden Rastnase versehen sind. Insofern erfolgt eine Trennung der Funktionen. Die Rasthaken 13 dienen zur axialen, insbesondere spielbehafteten Fixierung, während die Mantelwandabschnitte 18 eine sichere radiale Fixierung des Wälzlagers 9 in der Lageraufnahme 11 gewährleisten.

Während in dem vorliegenden Ausführungsbeispiel die Rasthaken 13 einstückig mit den Rastnasen 16 und dem Deckel 7 ausgebildet und aus Kunststoff gefertigt sind, ist auch eine Ausbildung der Rasthaken 13 aus Blech denkbar. Ebenfalls ist es denkbar, anstelle der Pressrippen 20 einen Federring, insbesondere eine Wellfeder zwischen dem Wälzlager 9 und dem Axialanschlag 17 vorzusehen.

Die beschriebene Vorrichtung ermöglicht es auf eine einfache und kostengünstige Art und Weise Stator 3 und Rotor 4 in dem Gehäuse 2 vorzumontieren und durch Aufschieben des Deckels 7 mit der Lageraufnahme 11 auf das Wälzlager 9 Letzteres sicher in der Lageraufnahme 11 zu montieren, ohne dass zusätzliche Montageschritte notwendig sind. Die vorteilhafte Lageraufnahme 11 bietet sich vor allem dann an, wenn der Außenring des Wälzlagers 9 über eine Spielpassung an dem Deckel 7 gelagert sein soll, wie im oben stehenden Ausführungsbeispiel beschrieben.

## Patentansprüche

1. Vorrichtung, insbesondere Deckel (7) oder Lagerschild, für die Lagerung eines Wälzlagers (9) einer elektrischen Maschine (1), mit einer Lageraufnahme (11), die zur radialen Lagerung eines Wälzlagers (9) der elektrischen Maschine (1) eine Mantelwand (12) und zur axialen Lagerung des Wälzlagers (9) zumindest einen ersten Axialanschlag (17) aufweist, wobei die Mantelwand (12) zumindest teilweise von mehreren sich axial erstreckenden biegsamen Rasthaken (13) gebildet wird, die einendig mit dem ersten Axialanschlag (17) verbunden sind und anderendig jeweils eine nach innen gerichtete Rastnase (14) aufweisen, die einen zweiten Axialanschlag (16) für das Wälzlager (9) bildet, **dadurch gekennzeichnet, dass** der erste und/oder der zweite Axialanschlag (16,17) stirnseitig mindestens ein elastisch verformbares Vorspannelement (21) aufweisen, wodurch ein Außenring des Wälzlagers (9) in der Lageraufnahme (11) axial zwischen den Axialanschlägen (16,17) vorgespannt gehalten ist.

2. Vorrichtung nach Anspruch (1), **dadurch gekennzeichnet, dass** die Rasthaken (13) einstückig mit dem ersten Axialanschlag (17) ausgebildet sind.

3. Vorrichtung nach einem der vorhergehenden Ansprüche, **dadurch gekennzeichnet, dass** die Rastnasen (14) einstückig mit den Rasthaken (13) ausgebildet sind.

4. Vorrichtung nach einem der vorhergehenden Ansprüche, **dadurch gekennzeichnet, dass** die Mantelwand (12) mehrere im Wesentlichen steif ausgebildete Mantelwandabschnitte (18) aufweist, die sich axial zwischen benachbarten Rasthaken (13) erstrecken und einendig mit dem ersten Axialanschlag (17) verbunden und anderendig rastnasenfrei ausgebildet sind.

5. Vorrichtung nach einem der vorhergehenden Ansprüche, **dadurch gekennzeichnet, dass** die Rastnasen (14) auf der dem zweiten Axialanschlag (16) gegenüber liegenden Seite jeweils eine Einführschräge (15) aufweisen.

6. Vorrichtung nach einem der vorhergehenden Ansprüche, **dadurch gekennzeichnet, dass** die Rasthaken (13) aus Kunststoff gefertigt sind.

7. Vorrichtung nach einem der vorhergehenden Ansprüche, **dadurch gekennzeichnet, dass** die Rasthaken (13) aus Blech gefertigt sind.

8. Vorrichtung nach einem der vorhergehenden Ansprüche, **dadurch gekennzeichnet, dass** das Vorspannelement (21) als achsial vorstehende Pressrippe (20) oder als Federring, insbesondere als Wellfeder ausgebildet ist.

9. Elektrische Maschine, insbesondere für ein Kraftfahrzeug, mit einem Gehäuse (2), in welchem ein Rotor (4) drehbar gelagert angeordnet sind, wobei zumindest eine Stirnseite des Gehäuses (2) durch eine separate Vorrichtung, insbesondere Deckel (7) oder Lagerschild, verschließbar ist, und wobei eine Rotorwelle (5) des Rotors (4) zumindest mittels eines Wälzlagers (8,9) an der Vorrichtung gehalten ist, wobei die Vorrichtung eine das Wälzlager (9) aufnehmende Lageraufnahme (11) mit einer das Wälzlager (9) radial lagernden Mantelwand (12) und mit einem ersten Axialanschlag (17) für das Wälzlager (9) aufweist, **dadurch gekennzeichnet, dass** die Vorrichtung nach einem oder mehreren der vorhergehenden Ansprüche ausgebildet ist.

## Claims

1. Apparatus, in particular cover (7) or bearing plate, for mounting an anti-friction bearing (9) of an electric machine (1), having a bearing seat (11) which has a casing wall (12) for radial mounting of an anti-friction bearing (9) of the electric machine (1) and at least one first axial stop (17) for axially mounting the anti-friction bearing (9), the casing wall (12) being formed at least partially by a plurality of axially extending flexible latching hooks (13) which are connected at one end to the first axial stop (17) and at the other end have in each case one inwardly directed latching lug (14) which forms a second axial stop (16) for the anti-friction bearing (9), **characterized in that** the first and/or the second axial stop (16, 17) have/has, on the end side, at least one elastically deformable prestressing element (21), as a result of which an outer ring of the anti-friction bearing (9) is held in the bearing seat (11) in a manner which is prestressed axially between the axial stops (16, 17).

2. Apparatus according to Claim 1, **characterized in that** the latching hooks (13) are configured in one piece with the first axial stop (17).

3. Apparatus according to either of the preceding claims, **characterized in that** the latching lugs (14) are configured in one piece with the latching hooks (13).

4. Apparatus according to one of the preceding claims, **characterized in that** the casing wall (12) has a plurality of casing wall sections (18) of substantially stiff configuration which extend axially between adjacent latching hooks (13) and are connected at one end to the first axial stop (17) and are configured without latching lugs at the other end.

5. Apparatus according to one of the preceding claims, **characterized in that** the latching lugs (14) have in each case one insertion bevel (15) on the side which lies opposite the second axial stop (16).

6. Apparatus according to one of the preceding claims, **characterized in that** the latching hooks (13) are manufactured from plastic.

7. Apparatus according to one of the preceding claims, **characterized in that** the latching hooks (13) are manufactured from sheet metal.

8. Apparatus according to one of the preceding claims, **characterized in that** the prestressing element (21) is configured as an axially projecting pressure rib (20) or as a split washer, in particular as an ondular washer.

9. Electric machine, in particular for a motor vehicle, having a housing (2), in which a rotor (4) is arranged in a rotatably mounted manner, it being possible for at least one end side of the housing (2) to be closed by way of a separate apparatus, in particular a cover (7) or bearing plate, and a rotor shaft (5) of the rotor (4) being held on the apparatus at least by means of an anti-friction bearing (8, 9), the apparatus having a bearing seat (11) which receives the anti-friction bearing (9) with a casing wall (12) which mounts the anti-friction bearing (9) radially and with a first axial stop (17) for the anti-friction bearing (9), **characterized in that** the apparatus is configured according to one or more of the preceding claims.

## Revendications

1. Dispositif, en particulier couvercle (7) ou flasque, pour le positionnement d'un palier à roulement (9) d'une machine électrique (1), avec un logement de palier (11), qui présente une paroi périphérique (12) pour le positionnement radial d'un palier à roulement (9) de la machine électrique (1) et au moins une première butée axiale (17) pour le positionnement axial du palier à roulement (9), dans lequel la paroi périphérique (12) est formée au moins en partie par plusieurs crochets d'encliquetage flexibles (13) s'étendant axialement, qui sont reliés par une extrémité à la première butée axiale (17) et présentent respectivement à l'autre extrémité un ergot d'encliquetage (14) dirigé vers l'intérieur, qui forme une deuxième butée axiale (16) pour le palier à roulement (9), **caractérisé en ce que** la première et/ou la deuxième butée axiale (16, 17) présentent du côté frontal au moins un élément de précontrainte déformable élastiquement (21), par lequel une bague extérieure du palier à roulement (9) est maintenue sous précontrainte dans le logement de palier (11) axialement entre les butées axiales (16, 17).

2. Dispositif selon la revendication 1, **caractérisé en ce que** les crochets d'encliquetage (13) sont formés d'une seule pièce avec la première butée axiale (17).

3. Dispositif selon l'une quelconque des revendications précédentes, **caractérisé en ce que** les ergots d'encliquetage (14) sont formés d'une seule pièce avec les crochets d'encliquetage (13).

4. Dispositif selon l'une quelconque des revendications précédentes, **caractérisé en ce que** la paroi périphérique (12) présente plusieurs parties de paroi périphérique (18) de nature essentiellement rigide, qui s'étendent axialement entre des crochets d'encliquetage voisins (13) et qui sont reliées par une extrémité à la première butée axiale (17) et sont formées à l'autre extrémité sans ergot d'encliquetage.

5. Dispositif selon l'une quelconque des revendications précédentes, **caractérisé en ce que** les ergots d'encliquetage (14) présentent respectivement une rampe d'introduction (15) sur le côté situé à l'opposé de la deuxième butée axiale (16).

6. Dispositif selon l'une quelconque des revendications précédentes, **caractérisé en ce que** les crochets d'encliquetage (13) sont fabriqués en matière synthétique.

7. Dispositif selon l'une quelconque des revendications précédentes, **caractérisé en ce que** les crochets d'encliquetage (13) sont fabriqués en tôle.

8. Dispositif selon l'une quelconque des revendications précédentes, **caractérisé en ce que** l'élément de précontrainte (21) est réalisé sous forme de nervure de pression saillante axialement (20) ou de rondelle élastique, en particulier de rondelle ondulée.

9. Machine électrique, en particulier pour un véhicule automobile, avec un boîtier (2), dans lequel un rotor (4) est monté de façon rotative, dans laquelle au moins un côté frontal du boîtier (2) peut être fermé par un dispositif séparé, en particulier un couvercle (7) ou un flasque, et dans laquelle un arbre de rotor (5) du rotor (4) est maintenu sur le dispositif au moins au moyen d'un palier à roulement (8, 9), dans laquelle le dispositif présente un logement de palier (11) contenant le palier à roulement (9) avec une paroi périphérique (12) soutenant radialement le palier à roulement (9) et avec une première butée axiale (17) pour le palier à roulement (9), **caractérisée en ce que** le dispositif est réalisé selon une ou plusieurs des revendications précédentes.
